# FASCICULE DE BREVET EUROPEEN

(11) **EP 1 914 455 B1**
(45) Date de publication et mention de la délivrance du brevet: **15.06.2011**
(21) Numéro de dépôt: 07117263.9
(22) Date de dépôt: 26.09.2007
(51) Int. Cl.: F16K 11/074

(54) **Distributeur tournant de pression et machine carrousel de traitement de corps creux qui en est équipée**
Druckdrehverteiler und Karussellmaschine zur Behandlung von Höhlkörpern, die damit ausgerüstet ist
Rotating pressure dispenser and carrousel machine for treating hollow bodies equipped with same

(30) Priorité: 16.10.2006 FR 0609056
(43) Date de publication de la demande: 23.04.2008
(73) Titulaire: Sidel Participations, 76930 Octeville Sur Mer (FR)
(72) Inventeur: DANEL, Laurent, 76930, OCTEVILLE SUR MER (FR); MOUCHELET, Marc, 76930, OCTEVILLE SUR MER (FR)
(74) Mandataire: Cabinet Plasseraud

(56) Documents cités:
- FR-A- 2 791 598
- US-A- 2 555 367
- US-B1- 6 997 213

## Description

La présente invention concerne d'une façon générale le domaine du traitement de corps creux, et notamment de bouteilles, dans plusieurs postes de traitement identiques destinés chacun à prendre en charge au moins un corps creux et dans lequel, pour au moins une étape du traitement, on met le poste de traitement en communication avec une source de pression, notamment sensiblement inférieure à la pression atmosphérique, par l'intermédiaire d'un distributeur tournant étanche.

Plus spécifiquement, l'invention concerne des perfectionnements apportés aux distributeurs tournants de pression pour des machines à carrousel de traitement de corps creux comportant plusieurs postes de traitement identiques destinés chacun à prendre en charge au moins un corps creux, ces distributeurs comportant deux couronnes coaxiales, l'une fixe et l'autre rotative, qui sont en contact l'une contre l'autre de manière étanche par des faces de contact respectives en vis-à-vis définissant un plan de joint, la couronne rotative comportant des orifices de communication propres à être raccordés chacun à au moins un poste de traitement et débouchant dans la face de contact de ladite couronne rotative, la couronne fixe comportant au moins une lumière propre à être raccordée à une source de pression de la machine et débouchant dans la face de contact de ladite couronne fixe de manière à se trouver sur la trajectoire des orifices de la couronne rotative de telle sorte qu'au moins un poste de traitement soit mis en communication avec la source de pression lorsque l'orifice correspondant se trouve en regard de la lumière, de la graisse étant étalée entre les faces de contact respectives des deux couronnes pour assurer l'étanchéité vis-à-vis de la pression.

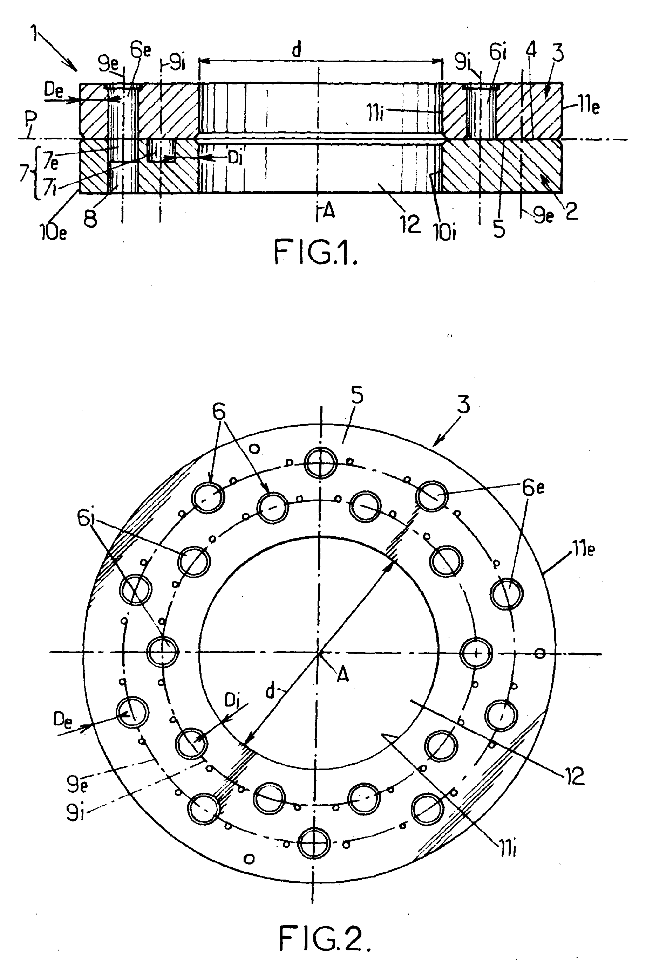

Un distributeur tournant de ce type est décrit dans le document FR 2 791 598 au nom de la Demanderesse et qui décrit les caractéristiques du préambule de la revendication 1. En se reportant à la figure 1 des dessins annexés, le distributeur tournant, désigné dans son ensemble par la référence 1, comporte deux couronnes 2, 3 coaxiales, en principe d'axe A sensiblement vertical dans les conditions d'utilisation comme montré à la figure 1. L'une des couronnes (celle 2 située en dessous sur la figure 1) est fixe et l'autre couronne (celle 3 située au dessus sur la figure 1) est rotative. Elles sont en contact l'une contre l'autre de manière étanche par des faces 4, 5 de contact respectives en vis-à-vis définissant un plan P de joint. La couronne 3 rotative comporte des orifices de communication, désignés génériquement par la référence 6, qui sont propres à être raccordés chacun à au moins un poste de traitement individuel d'un récipient et qui débouchent dans la face 5 de contact de ladite couronne 3 rotative. La couronne 2 fixe comporte au moins une lumière, désignée génériquement par la référence 7, qui est propre à être raccordée, en 8, à une source de pression de la machine et qui débouche dans la face 4 de contact de ladite couronne 2 fixe de manière à se trouver sur la trajectoire des orifices 6 de la couronne 3 rotative ; ainsi, un poste de traitement est mis en communication avec la source de pression lorsque l'orifice 6 correspondant se trouve en regard de la lumière 7. Enfin, de la graisse est étalée entre les faces 4, 5 de contact respectives des deux couronnes 2, 3 pour empêcher le frottement sec de la face 5 de la couronne 3 rotative sur la face 4 de la couronne 2 fixe, mais aussi et surtout pour assurer l'étanchéité du contact des deux faces 4, 5, et donc l'étanchéité des liaisons entre la lumière 7 et les orifices 6 successivement, vis-à-vis de la pression.

Dans sa conception telle que décrite et représentée dans le document FR 2 791 598, le distributeur 1 tournant est agencé avec des orifices 6 de raccordement aux postes de traitement qui sont répartis sur deux circonférences, désignées génériquement par la référence 9, de diamètres différents (les orifices situés sur ces deux circonférences respectivement 9e, 9i sont désignés 6e, 6i respectivement) et avec au moins deux lumières 7e, 7i de raccordement à au moins une source de pression qui sont situées, elles aussi, sur deux circonférences de mêmes diamètres que celles des susdits orifices 6e, 6i. Cet agencement se voit bien sur la figure 2 des dessins annexés qui est une vue de dessous de la couronne 3 rotative.

Dans cet agencement connu, les orifices 6 et lumières 7 des couronnes 2, 3 respectives sont écartés radialement des bords périphériques, extérieur et intérieur, respectivement 10e, 10i ; 11e, 11i, des deux couronnes 2, 3. Dans l'exemple de réalisation du distributeur 1 tournant illustré à la figure 1, les deux couronnes 2, 3 ont sensiblement le même diamètre et les orifices 6 de la couronne 3 rotative ont sensiblement le même diamètre, ou au moins la même dimension radiale que les lumières 7 de la couronne 2 fixe. Il en résulte que les orifices 6 et les lumières 7 sont situées à la même distance De radiale des bords 11e, 10e des couronnes 3, 2 respectives et à la même distance Di radiale des bords 11i, 10i des couronnes 3, 2 respectives. Dans l'exemple représenté, les distances De et Di radiales sont sensiblement égales, comme on le voit mieux sur la représentation de la couronne 3 rotative en vue de dessous donnée à la figure 2. Au surplus, dans cet exemple, les distances De, Di sont du même ordre de grandeur que le diamètre intérieur des orifices 6 de la couronne 3 rotative comme on le voit sur la figure 2.

Ainsi, les largeurs respectivement De, Di des joints d'étanchéité formés par la graisse sur les pourtours extérieur et intérieur du plan P de joint sont suffisantes pour conférer l'étanchéité requise.

Cet agencement connu est actuellement exploité dans des machines rotatives ayant typiquement 20 postes de traitement, et il donne entièrement satisfaction.

Cependant, les fabricants de récipients, et notamment de bouteilles, souhaitent de façon permanente accroître les cadences de production. Pour certains traitements (par exemple le dépôt d'une couche barrière de carbone sur la face intérieure de récipients en matière thermoplastique telle que du PET par mise en oeuvre d'un plasma basse pression), la vitesse de déroulement du processus de traitement au niveau de chaque poste ne peut pas être accrue de façon notable. Une augmentation importante de la cadence de production ne peut alors être envisagée qu'en augmentant le nombre des postes de traitement. C'est ainsi que la Demanderesse envisage de développer une nouvelle machine dans laquelle le nombre des postes de traitement est notablement accru, typiquement est quasiment doublé.

Au niveau du distributeur tournant, cela peut se traduire par un accroissement correspondant des liaisons à assurer, c'est-à-dire typiquement par un quasi doublement du nombre des orifices de communication à prévoir sur la couronne rotative.

Cependant, les couronnes du distributeur tournant sont des pièces de grande dimension qui sont très lourdes ; typiquement, dans les machines actuelles équipées de 20 postes de traitement, les couronnes ont un diamètre d'environ 0,60 mètre et un poids individuel de l'ordre de 110 kg. S'il est possible d'en augmenter encore quelque peu le diamètre extérieur, la capacité des machines nécessaires à la fabrication de ces couronnes impose toutefois une limite qu'il n'est pas possible de franchir, ce qui pourtant serait nécessaire pour répartir le nombre accru d'orifices de communication sur le même nombre (typiquement deux) de circonférences de diamètres différents. Pour conserver aux couronnes approximativement leur diamètre actuel, il est donc nécessaire de répartir les orifices de communication sur un plus grand nombre (typiquement trois, voire quatre) de circonférences de diamètres différents.

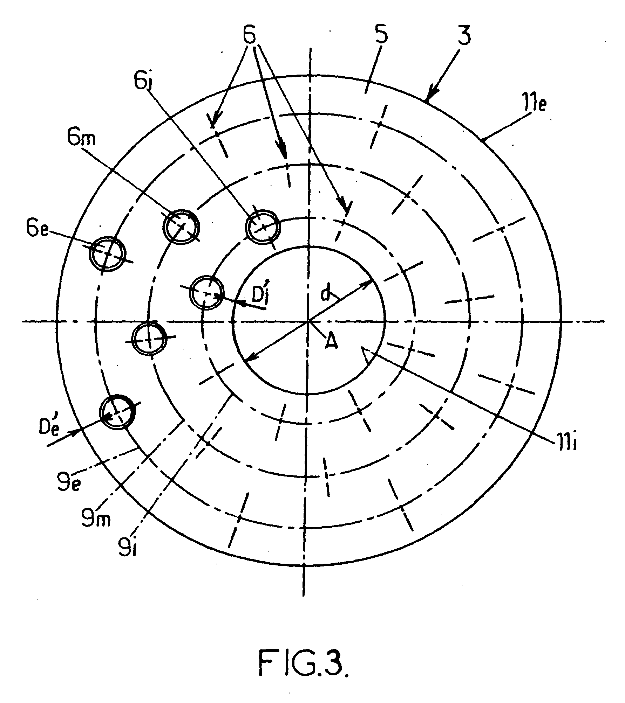

Cet objectif est possible à atteindre par exemple en réduisant le diamètre d de l'évidement 12 central des couronnes 2, 3 et en occupant au maximum la surface disponible dans les couronnes. Cela conduit à disposer les orifices 6 et les lumières 7 situés sur les circonférences 9e, 9i extrêmes, respectivement extérieure et intérieure, le plus près possible des bords 10e, 11e ; 10i, 11i périphériques respectivement extérieur et intérieur des couronnes 2, 3. A titre d'exemple, la figure 3 montre en vue de dessous une couronne 3 rotative agencée selon une configuration de ce type avec les orifices 6 répartis en trois groupes 6e, 6m, 6i situés respectivement sur trois circonférences 9e, 9m, 9i respectivement extérieure, médiane et intérieure.

Toutefois dans ce cas, les distances De' entre les bords externes des orifices 6e et le bord 11e extérieur de la couronne 3 et Di' entre les bords internes des orifices 6i et le bord 11i intérieur de la couronne 3 (et de même pour la couronne 2 fixe) sont très réduites (typiquement d'environ 49 mm sur les machines actuelles), et par conséquent les largeurs des joints de graisse sur les périphéries extérieure et intérieure du plan de joint deviennent insuffisantes pour assurer l'étanchéité requise.

Le document US-B1-6 997 213 concerne une valve tournante multivoie qui assure l'interconnexion d'une pluralité de conduites selon un cycle prédéterminé, cette valve comportant un empilement de plaques perforées définissant des canaux et des lumières pour former les circuits fluidiques. Cependant, ce document n'évoque pas le problème des étanchéités entre les plaques, en particulier en relation avec les orifices les plus voisins des bords desdites plaques.

L'invention a pour but de proposer un agencement perfectionné du distributeur tournant qui permette de répondre aux exigences d'étanchéité en présence d'une pression, notamment sensiblement inférieure à la pression atmosphérique, sans accroissement sensible du diamètre extérieur des couronnes, sans modification structurelle profonde du distributeur tournant, et sans surcoût important dans la fabrication et l'entretien du distributeur tournant.

A ces fins, l'invention propose un distributeur tournant de fluide sous pression pour une machine à carrousel de traitement de corps creux du type exposé au préambule qui, étant agencé selon l'invention conformément à la revendication 1, se caractérise en ce qu'il comporte au moins une goulotte annulaire qui coiffe le débouché annulaire du plan de joint et qui est en communication avec l'atmosphère, en ce qu'à l'intérieur de cette goulotte sont prévues des ailes respectives mutuellement imbriquées sans contact formant des chicanes, et en ce que la goulotte est remplie de graisse.

On peut prévoir que le distributeur tournant comporte une goulotte annulaire extérieure coiffant le débouché annulaire extérieur du plan de joint, ou bien qu'il comporte une goulotte annulaire intérieure coiffant le débouché annulaire intérieur du plan de joint. Dans un mode de réalisation préféré, le distributeur tournant combine les deux dispositions et comporte une goulotte annulaire extérieure coiffant le débouché annulaire extérieur du plan de joint et une goulotte annulaire intérieure coiffant le débouché annulaire intérieur du plan de joint.

Grâce à cet agencement, on dispose d'une réserve de graisse disponible pour alimenter en permanence l'interface entre les deux couronnes, en particulier lorsque le joint est destiné à distribuer une pression inférieure, voire très inférieure à la pression atmosphérique qui tend à « pomper » la graisse depuis les périphéries externe et interne du joint tournant.

Dans un mode de réalisation préféré, on prévoit que la goulotte annulaire comporte deux panneaux de carter non jointifs qui sont solidaires respectivement des deux couronnes et qui s'étendent approximativement radialement à partir des deux couronnes respectivement en étant approximativement parallèles l'un à l'autre. Avantageusement alors, les ailes mutuellement imbriquées peuvent être solidaires de ces deux panneaux respectifs, être sensiblement cylindriques de révolution, et s'étendre sensiblement perpendiculairement au plan de joint. On peut notamment prévoir que la goulotte annulaire ainsi constituée soit la goulotte annulaire extérieure.

Dans un autre mode de réalisation préféré, on prévoit que la goulotte annulaire comporte une cloison cylindrique définissant une chambre annulaire en regard du débouché annulaire du plan de joint, et que la cloison possède un de ses bords circulaire solidarisé à une couronne, notamment à la couronne fixe lorsque l'axe des couronnes est sensiblement vertical, et son autre bord circulaire qui est non jointif avec l'autre couronne. Avantageusement alors, les ailes mutuellement imbriquées peuvent s'étendre sensiblement radialement et être solidaires des deux couronnes et de la cloison. On peut notamment prévoir que la goulotte annulaire ainsi constituée soit la goulotte annulaire intérieure : une telle goulotte possède une dimension radiale relativement faible et n'occupe qu'un faible espace radial dans l'évidement central des couronnes qui est par ailleurs traversé par de nombreuses liaisons.

Comme cela ressort clairement des explications exposées ci-dessus, un distributeur tournant agencé conformément à l'invention trouve une application tout particulièrement intéressante dans le cas, courant en pratique, où les deux couronnes coaxiales sont d'axe sensiblement vertical et disposées l'une sur l'autre et où c'est la couronne inférieure qui est fixe et la couronne supérieure qui est rotative. De même, une application plus particulièrement intéressante des dispositions de l'invention concerne le cas où les deux couronnes fixe et rotative possèdent respectivement des orifices et des lumières répartis en plusieurs groupes, et notamment au moins trois groupes, disposés sur des diamètres différents. Egalement, une application plus particulièrement intéressante des dispositions de l'invention concerne le cas où le distributeur tournant est agencé pour distribuer une pression inférieure, voire très inférieure à la pression atmosphérique.

Un distributeur tournant agencé comme il vient d'être exposé conformément à l'invention peut trouver une application particulièrement intéressante dans une machine à carrousel pour le traitement de corps creux, du type comportant plusieurs postes identiques de traitement propres à prendre en charge au moins un corps creux, ladite machine étant équipée d'un distributeur tournant propre, pour au moins une étape de traitement, à mettre successivement chaque poste de traitement en communication avec au moins une source de pression, en particulier de pression inférieure, voire très inférieure à la pression atmosphérique. Dans une application préférée, il peut s'agir d'une machine de dépôt, à l'aide d'un plasma basse pression, d'un revêtement barrière, notamment en carbone, sur la face interne de corps creux, notamment de bouteilles, en matériau thermoplastique, notamment en PET, telle par exemple la machine dont la conception de base est décrite dans le document FR 2 776 540 au nom de la Demanderesse.

L'invention sera mieux comprise à la lecture de la description qui suit de certains modes de réalisation préférés donnés à titre d'exemples purement illustratifs. Dans cette description, on se réfère aux dessins annexés sur lesquels :
- la figure 1 est une vue de côté, en coupe diamétrale, d'un distributeur tournant de l'état de la technique tel que divulgué dans le document FR 2 791 598 au nom de la Demanderesse ;
- la figure 2 est une vue de dessous de la couronne rotative du distributeur tournant de la figure 1 ;
- la figure 3 est une vue de dessous d'une couronne rotative d'un distributeur tournant modifié pour le raccordement d'un nombre accru de postes de traitement ;
- la figure 4 est une vue de côté avec arrachements partiels d'un distributeur tournant agencé conformément à l'invention ; et
- les figures 5 et 6 sont des vues schématiques, en coupe transversale et à plus grande échelle, de deux modes de réalisation possibles de goulottes à graisse propres à équiper le distributeur tournant de la figure 4.

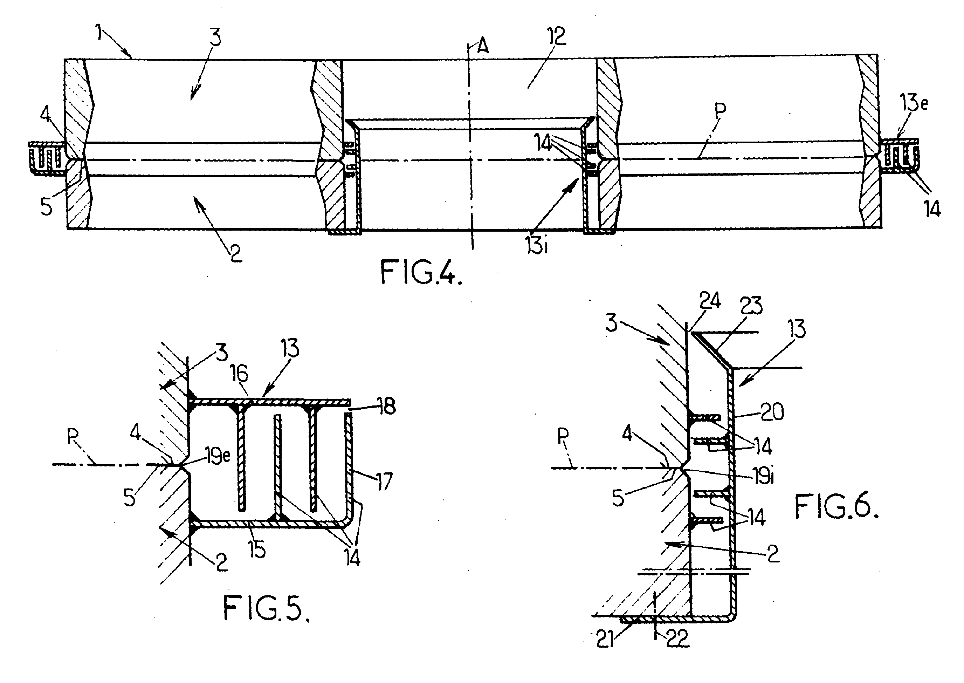

On se référe maintenant plus spécifiquement à la figure 4 sur laquelle les organes ou parties analogues à ceux de la figure 1 sont désignés par les mêmes références numériques.

La conception spécifique des couronnes 2, 3 respectivement fixe et rotative n'entre pas en ligne de compte dans le contexte de l'invention, à ceci près que, comme montré à la figure 3, la conception géométrique des couronnes conduit à des joints de graisse périphériques, respectivement extérieur et intérieur, qui possèdent des largeurs insuffisantes pour assurer l'étanchéité requise, en particulier lorsque le distributeur tournant est destiné à distribuer une pression inférieure, voire très inférieure à la pression atmosphérique.

Conformément à l'invention, on fait comporter au distributeur 1 tournant au moins une goulotte annulaire, désignée génériquement par la référence 13, qui coiffe le débouché annulaire du plan P de joint et qui est en communication avec l'atmosphère ; à l'intérieur de la goulotte 13 sont prévues des ailes 14 respectives mutuellement imbriquées sans contact formant des chicanes, et la goulotte 13 est remplie de graisse. Il peut s'agir d'une goulotte 13e annulaire extérieure coiffant le débouché annulaire extérieur du plan P de joint comme visible à droite et à gauche sur la représentation de la figure 4. Il peut s'agir d'une goulotte 13i annulaire intérieure coiffant le débouché annulaire intérieur du plan P de joint comme visible au centre de la représentation de la figure 4. Dans un mode de réalisation préféré illustré à la figure 4, le distributeur 1 tournant combine les deux dispositions et comporte une goulotte 13e annulaire extérieure coiffant le débouché annulaire extérieur du plan P de joint et une goulotte 13i annulaire intérieure coiffant le débouché annulaire intérieur du plan P de joint.

Différentes solutions sont envisageables pour réaliser la goulotte 13.

Dans un premier mode de réalisation visible à la figure 4 et représenté à plus grande échelle à la figure 5, on prévoit que la goulotte 13 annulaire comporte deux panneaux de carter non jointifs, respectivement un panneau 15 inférieur qui est solidaire de la couronne 2 fixe et un panneau 16 supérieur qui est solidaire de la couronne 3 rotative. Les deux panneaux 15, 16 s'étendent approximativement radialement à partir des deux couronnes 2, 3 respectivement et sont approximativement parallèles l'un à l'autre. Dans l'exemple illustré à la figure 5, le panneau 16 supérieur est approximativement plan, tandis que le panneau 15 inférieur est conformé en une pièce coudée à section en L formant, de façon intégrale, la paroi 17 périphérique de la goulotte. Les bords libres du panneau 16 supérieur et de la paroi 17 périphérique s'étendent à proximité l'un de l'autre, mais sans être jointifs de manière à définir une fente 18 de mise en communication du volume intérieur de la goulotte avec l'atmosphère. Compte tenu du fait que, dans l'exemple considéré, le distributeur 1 tournant est d'axe sensiblement vertical, la fente 18 est située dans la partie supérieure de la goulotte 13.

Les deux panneaux 15, 16 de carter sont fixés aux couronnes 2, 3 respectives de toute manière appropriée, par exemple par soudure ou par boulonnage.

Sur leurs faces respectives tournées vers l'intérieur de la goulotte, les deux panneaux 15, 16 de carter supportent les susdites ailes 14 déflectrices qui sont concentriques et solidarisées, par exemple par soudure, alternativement aux deux panneaux de carter et donc mutuellement imbriquées en s'étendant sensiblement perpendiculairement au plan P de joint. On définit ainsi un trajet en chicanes entre la fente 18 et le débouché 19e extérieur du plan P de joint.

Le volume intérieur de la goulotte 13 est rempli de graisse, laquelle graisse peut s'écouler librement dans l'interface du plan P de joint sous l'action de la différence de pression entre la pression atmosphérique présente à la fente 18 et la pression inférieure à la pression atmosphérique présente au niveau du plan P de joint.

Le mode de réalisation de la goulotte 13 qui vient d'être décrit en référence à la figure 5 présente un encombrement radial sensible. Aussi, dans le mode de réalisation préféré du distributeur 1 tournant qui est illustré à la figure 4, c'est la goulotte 13e extérieure qui est constituée comme montré à la figure 5 du fait qu'autour du distributeur 1 un espace radial suffisant est disponible.

A titre de solution alternative, on peut avoir recours à un autre mode de réalisation de la goulotte 13, étant cependant entendu que cet autre mode de réalisation n'est pas exclusif de l'implantation dans l'évidement 12 central du distributeur tournant qui est exposée ci-après et pourrait être mis en oeuvre en tant que goulotte extérieure.

Comme visible à la figure 4 et représenté à plus grande échelle à la figure 6, la goulotte 13 annulaire comporte une cloison 20 cylindrique définissant une chambre annulaire en regard du débouché 19i annulaire du plan P de joint. La solution la plus simple consiste en ce que, comme illustré, la cloison 20 soit solidarisée à la couronne 2 fixe de toute manière appropriée ; notamment, elle pourrait être soudée à la couronne 2 par exemple sur la face latérale intérieure de celle-ci ; à titre de variante, à la figure 6 on a représenté la cloison 20 s'étendant inférieurement jusqu'à la face inférieure de la couronne 2 fixe et coudée par un rabat 21 qui est solidarisé, par exemple par boulonnage 22 comme représenté, sur cette face inférieure.

La partie 23 supérieure de la cloison 20 est coudée en direction de la couronne 3 rotative. Compte tenu du fait que, dans l'exemple plus particulièrement considéré, le distributeur 1 tournant est d'axe sensiblement vertical avec la couronne 3 rotative située sur le dessus, le bord de la partie 23 supérieure de la cloison 20 n'est pas jointif avec la paroi latérale de la couronne 3 de manière à définir une fente 24 de mise en communication du volume intérieur de la goulotte avec l'atmosphère.

Bien entendu, à titre de variante la cloison 20 pourrait être solidarisée à la couronne 3 rotative, avec toutefois une complication sensible de structure pour assurer la liaison étanche du bord inférieur de la cloison 20 avec la couronne 2 fixe.

Sur leurs faces mutuellement en vis-à-vis, la cloison 20 et les faces latérales des couronnes 2 et 3 supportent, par exemple par soudure, les susdites ailes 14 déflectrices de façon alternée de part et d'autre du débouché 19i intérieur du plan P de joint. Les ailes 14 sont mutuellement imbriquées et s'étendent sensiblement radialement. On constitue ainsi des trajets en chicanes, d'une part, entre la fente 24 et le débouché 19i et, d'autre part, entre le bas du volume intérieur de la goulotte qui constitue la réserve principale de graisse et le débouché 19i du plan P de joint.

Le volume intérieur de la goulotte 13 est rempli de graisse, laquelle graisse peut s'écouler librement dans l'interface du plan P de joint sous l'action de la différence de pression entre la pression atmosphérique présente à la fente 24 et la pression inférieure à la pression atmosphérique présente au niveau du plan P de joint.

Compte tenu de son étendue radiale relativement faible, la goulotte annulaire ainsi constituée convient parfaitement pour réaliser la goulotte 13i annulaire intérieure.

Comme cela ressort clairement des explications données plus haut, il est tout particulièrement avantageux d'équiper un distributeur tournant avec au moins une goulotte conformément à l'invention lorsque les deux couronnes 2 fixe et 3 rotative possèdent respectivement des orifices 6 et des lumières 7 répartis en plusieurs groupes disposés sur des circonférences 9 concentriques de diamètres différents, et/ou aussi lorsque le distributeur tournant est destiné à distribuer une pression inférieure, voire très inférieure à la pression atmosphérique.

Dans ces conditions, l'invention semble devoir trouver une application préférée, bien que non exclusive, dans une machine à carrousel pour le traitement de corps creux, du type comportant plusieurs postes identiques de traitement propres à prendre en charge au moins un corps creux, ladite machine étant équipée d'un distributeur tournant propre, pour au moins une étape de traitement, à mettre successivement chaque poste de traitement en communication avec au moins une source de pression, le distributeur tournant est agencé selon l'invention comme il vient d'être exposé.

Une application plus spécifiquement visée par l'invention dans ce contexte concerne une machine à carrousel comme indiqué ci-dessus qui consiste en une machine de dépôt, à l'aide d'un plasma basse pression, d'un revêtement barrière, notamment en carbone, sur la face interne de corps creux, notamment de bouteilles, en matériau thermoplastique, notamment en PET.

## Revendications

1. Distributeur (1) tournant de pression pour une machine à carrousel de traitement de corps creux comportant plusieurs postes de traitement identiques destinés chacun à prendre en charge au moins un corps creux, ce distributeur (1) tournant comportant deux couronnes (2, 3) coaxiales, l'une (2) fixe et l'autre (3) rotative, qui sont en contact l'une contre l'autre de manière étanche par des faces (4, 5) de contact respectives en vis-à-vis définissant un plan (P) de joint, la couronne (3) rotative comportant des orifices (6) de communication propres à être raccordés chacun à au moins un poste de traitement et débouchant dans la face (5) de contact de ladite couronne (3) rotative, la couronne (2) fixe comportant au moins une lumière (7) propre à être raccordée à une source de pression de la machine et débouchant dans la face (4) de contact de ladite couronne (2) fixe de manière à se trouver sur la trajectoire des orifices (6) de la couronne (3) rotative de telle sorte qu'au moins un poste de traitement soit mis en communication avec la source de pression lorsque l'orifice (6) correspondant se trouve en regard de la lumière (7), de la graisse étant étalée entre les faces (4, 5) de contact respectives des deux couronnes (2, 3) pour assurer l'étanchéité vis-à-vis de la pression,
**caractérisé**
**en ce qu'**il comporte au moins une goulotte (13) annulaire qui coiffe le débouché (19) annulaire du plan (P) de joint et qui est en communication (18, 24) avec l'atmosphère,
**en ce qu'**à l'intérieur de cette goulotte (13) sont prévues des ailes (14) respectives mutuellement imbriquées sans contact en formant des chicanes, et
**en ce que** la goulotte (13) est remplie de graisse.

2. Distributeur tournant selon la revendication 1, **caractérisé en ce qu'**il comporte une goulotte (13e) annulaire extérieure coiffant le débouché (19e) annulaire extérieur du plan (P) de joint.

3. Distributeur tournant selon la revendication 1 ou 2, **caractérisé en ce qu'**il comporte une goulotte (13i) annulaire intérieure coiffant le débouché (19i) annulaire intérieur du plan (P) de joint.

4. Distributeur tournant selon l'une quelconque des revendications 1 à 3, **caractérisé en ce que** la goulotte (13) annulaire comporte deux panneaux (15, 16) de carter non jointifs solidaires respectivement des deux couronnes (2, 3) qui s'étendent approximativement radialement à partir des deux couronnes respectivement et qui sont approximativement parallèles l'un à l'autre.

5. Distributeur tournant selon la revendication 4, **caractérisé en ce que** les ailes (14) mutuellement imbriquées sont solidaires de ces deux panneaux (15, 16) respectifs, sont sensiblement cylindriques de révolution, et s'étendent sensiblement perpendiculairement au plan (P) de joint.

6. Distributeur tournant selon la revendication 5, **caractérisé en ce que** la goulotte annulaire ainsi constituée est la goulotte (13e) annulaire extérieure.

7. Distributeur tournant selon l'une quelconque des revendications 1 à 3, **caractérisé en ce que** la goulotte (13) annulaire comporte une cloison (20) cylindrique définissant une chambre annulaire en regard du débouché (19) annulaire du plan (P) de joint, et **en ce que** la cloison (20) a un de ses bords circulaire solidarisé (22) à une couronne (2) et son autre bord circulaire non jointif avec l'autre couronne (3).

8. Distributeur tournant selon la revendication 7, **caractérisé en ce que** les ailes (14) mutuellement imbriquées s'étendent sensiblement radialement et sont solidaires des deux couronnes (2, 3) et de la cloison (20).

9. Distributeur tournant selon la revendication 8, **caractérisé en ce que** la goulotte annulaire ainsi constituée est la goulotte (13i) annulaire intérieure.

10. Distributeur tournant selon l'une quelconque des revendications 1 à 9, **caractérisé en ce que** les deux couronnes (2, 3) coaxiales sont d'axe (A) sensiblement vertical et disposées l'une sur l'autre et **en ce que** la couronne (2) inférieure est fixe et la couronne (3) supérieure est rotative.

11. Distributeur tournant selon l'une quelconque des revendications 1 à 10, **caractérisé en ce que** les deux couronnes (2, 3) fixe et rotative possèdent respectivement des orifices (6) et des lumières (7) répartis en plusieurs groupes disposés sur des circonférences (9) concentriques de diamètres différents.

12. Distributeur tournant selon l'une quelconque des revendications 1 à 11, **caractérisé en ce que** la pression à distribuer est inférieure à la pression atmosphérique.

13. Machine à carrousel pour le traitement de corps creux, du type comportant plusieurs postes identiques de traitement propres à prendre en charge au moins un corps creux, ladite machine étant équipée d'un distributeur (1) tournant propre, pour au moins une étape de traitement, à mettre successivement chaque poste de traitement en communication avec au moins une source de pression, **caractérisée en ce que** le distributeur (1) tournant est agencé selon l'une quelconque des revendications 1 à 12.

14. Machine à carrousel selon la revendication 13, **caractérisée en ce qu'**il s'agit d'une machine de dépôt, à l'aide d'un plasma basse pression, d'un revêtement barrière, notamment en carbone, sur la face interne de corps creux, notamment de bouteilles, en matériau thermoplastique, notamment en PET.

## Claims

1. A rotating pressure distributor (1) for a carousel-type machine for treating hollow bodies comprising a plurality of identical treatment stations each intended for treating at least one hollow body, said rotating distributor (1) comprising two coaxial rings (2, 3), one (2) fixed and the other (3) rotating, which are sealingly in contact against one another by means of respective opposing contact faces (4, 5), defining a joint plane (P), the rotating ring (3) comprising communication orifices (6), each adapted for being connected to at least one treatment station and opening onto the contact face (5) of said rotating ring (3), the fixed ring (2) comprising at least one aperture (7) adapted for being connected to a pressure source of the machine and opening onto the contact face (4) of said fixed ring (2) so as to be located on the trajectory of the orifices (6) of the rotating ring (3) such that at least one treatment station is connected to the pressure source when the corresponding orifice (6) is coincident with the aperture (7), grease being spread between the respective contact faces (4, 5) of the two rings (2, 3) to provide the seal relative to the pressure,
**characterized**
**in that** it comprises at least one annular channel (13) which covers the annular opening (19) of the joint plane (P) and which is connected (18, 24) to the atmosphere,
**in that** inside this channel (13) respective mutually interlaced flanges (14) are provided without contact with one another, forming chicanes, and
**in that** the channel (13) is filled with grease.

2. The rotating distributor according to Claim 1, **characterized in that** it comprises an external annular channel (13e) covering the external annular opening (19e) of the joint plane (P).

3. The rotating distributor according to Claim 1 or 2, **characterized in that** it comprises an internal annular channel (13i) covering the internal annular opening (19i) of the joint plane (P).

4. The rotating distributor according to any one of Claims 1 to 3, **characterized in that** the annular channel (13) comprises two non-contiguous housing panels (15, 16) which are respectively attached to the two rings (2, 3) which extend approximately radially from the two respective rings and which are approximately parallel to one another.

5. The rotating distributor according to Claim 4, **characterized in that** the mutually interlaced flanges (14) are attached to these two respective panels (15, 16), are substantially cylindrical in revolution, and extend substantially perpendicular to the joint plane (P).

6. The rotating distributor according to Claim 5, **characterized in that** the annular channel thus formed is the external annular channel (13e).

7. The rotating distributor according to any one of Claims 1 to 3, **characterized in that** the annular channel (13) comprises a cylindrical partition (20) defining an annular chamber opposite the annular opening (19) of the joint plane (P), and **in that** the partition (20) has one of its circular edges attached (22) to a ring (2) and its other circular edge non-contiguous with the other ring (3).

8. The rotating distributor according to Claim 7, **characterized in that** the mutually interlaced flanges (14) extend substantially radially and are attached to the two rings (2, 3) and to the partition (20).

9. The rotating distributor according to Claim 8, **characterized in that** the annular channel thus formed is the internal annular channel (13i).

10. The rotating distributor according to any one of Claims 1 to 9, **characterized in that** the two coaxial rings (2, 3) have a substantially vertical axis (A) and are arranged above one another and **in that** the lower ring (2) is fixed and the upper ring (3) is rotating.

11. The rotating distributor according to any one of Claims 1 to 10, **characterized in that** the two fixed and rotating rings (2, 3) respectively have orifices (6) and apertures (7) distributed in a plurality of groups arranged on concentric circumferences (9) of different diameters.

12. The rotating distributor according to any one of Claims 1 to 11, **characterized in that** the pressure to be distributed is lower than atmospheric pressure.

13. A carousel-type machine for treating hollow bodies, of the type comprising a plurality of identical treatment stations capable of treating at least one hollow body, said machine being equipped with an individual rotating distributor (1) for at least one treatment step, to connect successively each treatment station with at least one pressure source, **characterized in that** the rotating distributor (1) is designed according to any one of Claims 1 to 12.

14. The carousel-type machine according to Claim 13, **characterized in that** it is a machine for depositing by means of a low pressure plasma, a barrier coating, in particular made of carbon, on the internal face of the hollow body, in particular of bottles, made of thermoplastic material, in particular PET.

## Patentansprüche

1. Druckdrehverteiler (1) und eine Karussellmaschine zur Behandlung von Hohlkörpern, mit mehreren identischen Behandlungsstationen, eine jede zur Übernahme mindestens eines hohlen Körpers ausgelegt, wobei der Drehverteiler (1) zwei koaxiale Kränze (2, 3) aufweist, der eine (2) feststehend und der andere (3) drehbar, die jeweils über die gegenüberstehenden eine Verbindungsebene (P) definierenden Kontaktflächen (4, 5) dichtend miteinander in Kontakt sind, wobei der drehbare Kranz (3) Kommunikationsöffnungen (6) aufweist, jede geeignet, um mit mindestens einer Behandlungsstation verbunden zu sein und in die Kontaktfläche (5) des drehbaren Kranzes (3) mündend, wobei der feststehende Kranz (2) mindestens einen Schlitz (7) aufweist, geeignet, um mit einer Druckquelle der Maschine verbunden zu sein und auf eine Weise in die Kontaktfläche (4) des feststehenden Kranzes (2) mündend, um sich auf der Umlaufbahn der Öffnungen (6) des drehbaren Kranzes (3) zu befinden, so dass mindestens eine Behandlungsstation mit der Druckquelle in Kommunikation gebracht wird, wenn sich die entsprechende Öffnung (6) gegenüber dem jeweiligen Schlitz (7) befindet, wobei Schmiermittel zwischen den jeweiligen Kontaktflächen (4, 5) der beiden Kränze (2, 3) aufgetragen ist, um die gegenseitige Druckdichtigkeit sicherzustellen,
**dadurch gekennzeichnet,**
**dass** er mindestens eine ringförmige Rinne (13) aufweist, die den ringförmigen Auslauf (19) der Verbindungsebene (P) abdeckt und die mit der Atmosphäre in Verbindung (18, 24) ist,
dadurch, dass im Inneren der Rinne (13) Flügel (14) vorgesehen sind, die sich jeweils gegenseitig um Hindernisse zu bilden ohne Kontakt überlappen und dadurch dass die Rinne (13) mit Schmiermittel ausgefüllt ist.

2. Drehverteiler gemäß Anspruch 1, **dadurch gekennzeichnet, dass** er eine äußere ringförmige Rinne (13e) aufweist, die den äußeren ringförmigen Auslauf (19e) der Verbindungsebene (P) abdeckt.

3. Drehverteiler gemäß Anspruch 1 oder 2, **dadurch gekennzeichnet, dass** er eine innere ringförmige Rinne (13i) aufweist, die den inneren ringförmigen Auslauf (19i) der Verbindungsebene (P) abdeckt.

4. Drehverteiler gemäß einem der Ansprüche 1 bis 3, **dadurch gekennzeichnet, dass** die ringförmige Rinne (13) zwei nicht aneinanderstoßende, mit der jeweiligen der zwei Kronen (2, 3) fest verbundene, Gehäusebleche (15, 16) aufweist, die sich näherungsweise radial von der jeweiligen der zwei Kronen erstrecken und die näherungsweise parallel zueinander sind.

5. Drehverteiler gemäß Anspruch 4, **dadurch gekennzeichnet, dass** die gegenseitig überlappenden Flügel (14) fest mit dem jeweiligen der zwei Gehäusebleche (15, 16) verbunden sind, im Wesentlichen rotationszylindrisch sind und sich im Wesentlichen rechtwinklig zu der Verbindungsebene (P) erstrecken.

6. Drehverteiler gemäß Anspruch 5, **dadurch gekennzeichnet, dass** die so zusammengesetzte ringförmige Rinne die äußere ringförmige Rinne (13e) ist.

7. Drehverteiler gemäß einem der Ansprüche 1 bis 3, **dadurch gekennzeichnet, dass** die ringförmige Rinne (13) eine zylindrische Trennwand (20) aufweist, die in Bezug zum ringförmigen Auslauf (19) der Verbindungsebene (P) eine ringförmige Kammer definiert und dadurch dass die Trennwand (20) mit einem ihrer kreisförmigen Ränder fest mit einem Kranz (2) verbunden (22) ist und mit ihrem anderen kreisförmigen Rand nicht mit dem anderen Kranz (3) aneinanderstößt.

8. Drehverteiler gemäß Anspruch 7, **dadurch gekennzeichnet, dass** die gegenseitig überlappenden Flügel (14) sich im Wesentlichen radial erstrecken und fest mit den zwei Kränzen (2, 3) und der Trennwand (20) verbunden sind.

9. Drehverteiler gemäß Anspruch 8, **dadurch gekennzeichnet, dass** die so zusammengesetzte ringförmige Rinne die innere ringförmige Rinne (13i) ist.

10. Drehverteiler gemäß einem der Ansprüche 1 bis 9, **dadurch gekennzeichnet, dass** die zwei koaxialen Kränze (2, 3) auf einer im Wesentlichen vertikalen Achse (A) und übereinander angeordnet sind und dadurch, dass der untere Kranz (2) feststehend ist und der obere Kranz (3) drehbar ist.

11. Drehverteiler gemäß einem der Ansprüche 1 bis 10, **dadurch gekennzeichnet, dass** die zwei feststehenden und drehbaren Kränze (2, 3) jeweils Öffnungen (6) und Schlitze (7) aufweisen, die in mehreren Gruppen auf konzentrischen Kreislinien (9) unterschiedlicher Durchmesser angeordnet sind.

12. Drehverteiler gemäß einem der Ansprüche 1 bis 11, **dadurch gekennzeichnet, dass** der zu verteilende Druck niedriger als der atmosphärische Druck ist.

13. Karussellmaschine zur Behandlung von Hohlkörpern der Ausführung, die mehrere identische Behandlungsstationen aufweist, geeignet zur Übernahme mindestens eines hohlen Körpers, wobei die Maschine mit einem Drehverteiler (1) ausgestattet ist, der für mindestens eine Behandlungsstufe geeignet ist, um nacheinander jede Behandlungsstation mit mindestens einer Druckquelle in Kommunikation zu bringen, **dadurch gekennzeichnet, dass** der Drehverteiler (1) gemäß einem der Ansprüche 1 bis 12 ausgebildet ist.

14. Karussellmaschine gemäß Anspruch 13, **dadurch gekennzeichnet, dass** es sich um eine Maschine zur Beschichtung mit einer Schutzbeschichtung, insbesondere aus Kohlenstoff, auf die Innenfläche von Hohlkörpern, insbesondere von Flaschen aus thermoplastischem Material, insbesondere PET, mittels eines Niedrigdruckplasmas handelt.
